# EUROPEAN PATENT APPLICATION

(11) **EP 1 840 753 A1**
(43) Date of publication of application: **03.10.2007**
(21) Application number: 05820392.8
(22) Date of filing: 26.12.2005
(51) Int. Cl.: G06F 15/00, G06F 3/14, G06F 13/00

(54) **SYSTEM, METHOD, AND PROGRAM FOR CONVERTING SCREEN ITEM DESCRIPTION AND MASTER ITEM CONTENT BY LOG-IN ID CONTROL**

(30) Priority: 27.12.2004 JP 2004378170
(71) Applicant: Sompo Japan Insurance Inc., Tokyo 160-8338 (JP)
(72) Inventor: NAKAMURA, Takashi c/o Sompo Japan Insurance Inc., Tokyo; 1608338 (JP); NAKAO, Atsuya c/o Sompo Japan Insurance Inc., Tokyo; 1608338 (JP)
(74) Representative: Beresford, Keith Denis Lewis
(86) International application number: PCT/JP2005/023825
(87) International publication number: WO 2006/070766

(57) **Abstract**

A system in a computer system is obtained wherein an item name notation and a table contents may be adjusted in accordance with the clients' specification. The present invention provides Receiving Means 3 for receiving User ID and password, Selecting Client Code Means 5 for selecting a client code in reference to the User Master M1 which stores the client code m15 corresponding to the ID and the password, Obtaining Item Name Notation Means 7A for obtaining the item name notation in reference to the Master Table for Item Name Notation M3 which stores the item name notation corresponding to the client code, Obtaining Master Table Contents Means 7B for obtaining the master table contents in reference to the various masters M5 including the table contents corresponding to the client code, and Creating/Displaying Customized Screens Means for creating and displaying the Customized Screens for Each Client which displays the item name notation and the master table contents.

## Description

### TECHNICAL FIELD

The present invention relates to a system, method and program for changing item name notation and master table contents by login ID control in computer system which inputs, stores, and refers to data through Internet.

### BACKGROUND ART

The conventional client system is based on versatile design and, in principle, the client uses the system in strict accordance with the system specification. Therefore, the client uses the versatile system despite inconvenience of using item name and table contents not adapted to client's circumstances or client's internal specification.

Conventionally, the client system which displays only the necessary contents for the users for usability in line with the operation procedures are disclosed, where the system stores configuration of contents in a table for each users along with a mechanism for changing contents (e.g., See Patent Document 1) . The systemhas a parts table in which the contents for realizing the operation is registered as a part and the contents selected from the parts table corresponding to the User ID are stored in a configuration table. When the User ID is inputted, the contents corresponding to the User ID is retrieved from the configuration table and the retrieved content is displayed in the menu.

A method is disclosed wherein such a screen generated from menu screen in a multi-window system is switched based on screen ID (e.g. , see Patent Document 2). This method previously stores in storage means the inputted information from inputting means for switching displays. The inputted information is associated with the screen identification information displayed when the inputted information is inputted. The switching of screen displays between a plurality of screens are performed when the inputted information from the inputting means is monitored and the status that the information for switching displays are inputted from the inputting means is detected.

However, the client system of the Patent Document 1 relates to setting of selecting the contents, and an adjustment of item name notation and table contents are not taken into consideration. In addition, the method of the Patent Document 2 is only a screen switching system which switches any screen in a certain group such as a screen generated from the menu screen in a multi-window system. That is, the method of the Patent Document 2 does not adjust the screen item name and the table contents not adapted to the client's circumstances or client's internal specification by screen switching.

Consequently, the problems to be solved by the present invention is to provide a system, method and program that can adjust the item name notation and table contents in accordance with the client's circumstances or client's internal specification in a computer system which inputs, stores, and refers to data through Internet.

Patent Document 1: Japanese Patent Application Laid-Open No. 2003-5882 (Abstract, paragraph 0003 and FIG. 1) Patent Document 2: Japanese Patent Application Laid-Open No. 2000-29600 (Abstract, paragraph 0013 and FIG. 1)

### DISCLOSURE OF THE INVENTION

In order to solve the above problem, in the computer system which inputs, stores and refers to the data through Internet, the system for changing the item name notation and master table contents by the login ID control is characterized by providing Receiving Means for receiving a User ID and a password, Selecting Client Code Means for selecting client code based on the ID and the password in reference to a User Master which stores the client code corresponding to the ID and the password, Obtaining Item Name Notation Means for obtaining the item name notation corresponding to the client code in reference to the Master Table for Item Name Notation which stores the item name notation corresponding to the client code, ObtainingMaster Table Contents Means for obtaining the master table contents corresponding to the client code in reference to various masters including the table contents corresponding to the client code, and Creating/Displaying Customized Screens Means for Each Client for creating and displaying the Customized Screens for the client code displaying the item name notation and the master table contents.

Thus, the item name notation and the master table contents can be adjusted by adapting to the client's circumstances or client's internal specification in reference to the various masters including the Master Table for Item Name Notation and the table contents by the client code corresponding to the ID and the password.

In the computer system which inputs, stores, refers to data through Internet, the method of changing the item name notation and master table contents by the login ID control is characterized by providing Receiving Step for receiving a User ID and a password, Selecting Client Code Step for selecting a client code based on the ID and the password in reference to the User Master which stores the client code corresponding to the ID and the password, Obtaining Item Name Notation Step for obtaining the item name notation corresponding to the client code in reference to the Master Table for Item Name Notation which stores the item name notation corresponding to the client code, Obtaining Master Table Contents Step for obtaining the master table contents corresponding to the client code in reference to the various masters including the table contents corresponding to the client code, and Creating/Displaying Customized Screens Step for Each Client for creating and displaying the Customized Screen for Each Client which displays the item name notation and the master table contents.

Thus, the item name notation and the master table contents can be adjusted by adapting to the client's circumstances or client's internal specification in reference to the various masters including the Master Table for Item Name Notation and the table contents by the client code corresponding to the ID and the password.

In the computer system which inputs, stores, refers to data through Internet, the program for changing the item name notation and master table contents by the login ID control cause the computer to perform a method characterized by comprising Receiving Step for receiving a User ID and a password, Selecting Client Code Step for selecting a client code based on the ID and the password in reference to the User Master which stores the client code corresponding to the ID and the password, Obtaining Item Name Notation Step for obtaining the item name notation corresponding to the client code in reference to the Master Table for Item Name Notation which stores the item name notation corresponding to the client code, Obtaining Master Table Contents Step for obtaining the master table contents corresponding to the client code in reference to the various masters including the table contents corresponding to the client code, and Creating/Displaying Customized Screens Step for Each Client for creating and displaying the Customized Screens for Each Client displaying the item name notation and the master table contents.

Thus, the item name notation and the master table contents can be adjusted by adapting to the client's circumstances or client's internal specification in reference to the various masters including the Master Table for Item Name Notation and the table contents by the client code corresponding to the ID and the password.

### BRIEF DESCRIPTION OF THE DRAWINGS

FIG. 1 is a block diagram showing an example of a system for changing item name notation and master table contents by login ID control according to the present invention;
FIG. 2 is a view showing an example of a table of a item name notation referring to clients ABC and XYZ in the master table for the item name notation of the system shown in FIG. 1;
FIG. 3A is a view showing an example of a Customized Screen for the client ABC in the system shown in FIG. 1;
FIG. 3B is a view showing an example of a Customized Screen for the client ABC in the system shown in FIG. 1;
FIG. 4A is a view showing an example of a Customized Screen for the client XYZ in the system shown in FIG. 1;
FIG. 4B is a view showing an example of a Customized Screen for the client XYZ in the system shown in FIG. 1;
FIG. 5 is a view showing various masters manageable for each client code in the system shown in FIG. 1;
FIG. 6 is a view showing an example of a table of a master table contents in a status master of the client ABC in the system shown in FIG. 1;
FIG. 7 is a view showing an example of a table of a master table contents in a status master of the client XYZ in the system shown in FIG. 1;
FIG. 8A is a view showing an example of a Customized Screen for the client ABC for describing a correspondent relation between the Customized Screen for the client ABC and the various masters shown in FIG. 5;
FIG. 8B is a view showing an example of a Customized Screen for the client ABC for describing a correspondent relation between the Customized Screen for the client ABC and the various masters shown in FIG. 5;
FIG. 9A is a view showing an example of a Customized Screen for the client ABC at an entry of master table contents in the system of FIG. 1;
FIG. 9B is a view showing an example of a Customized Screen for the client ABC at an entry of master table contents in the system of FIG. 1;
FIG. 10A is a view showing an example of a Customized Screen for the client XYZ at an entry of master table contents in the system of FIG. 1;
FIG. 10B is a view showing an example of a Customized Screen for the client XYZ at an entry of master table contents in the system of FIG. 1.

### BEST MODES FOR CARRYING OUT THE INVENTION

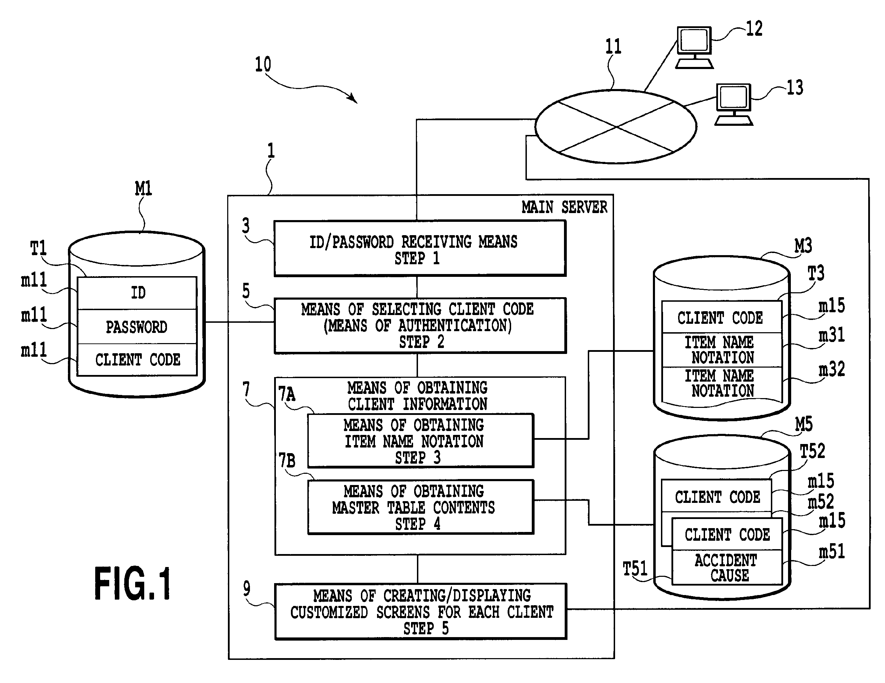

Embodiments of the present invention will be described in detail with reference to the drawings. FIG. 1 to FIG. 10 are related to a system for changing item name notation and master table contents by login ID control in computer system which inputs, stores and refers to data through Internet as a one specific embodiment.

In this embodiment, an example of the system for changing the item name notation and the master table contents by login ID control applied to a personal computer (PC) of accident insurance client and a main server of insurance companies is specifically mentioned. A hereinafter described client ABC is, for example, a store manager (or store management company) and a client XYZ is, for example, a gas station manager (or a gas station management company).

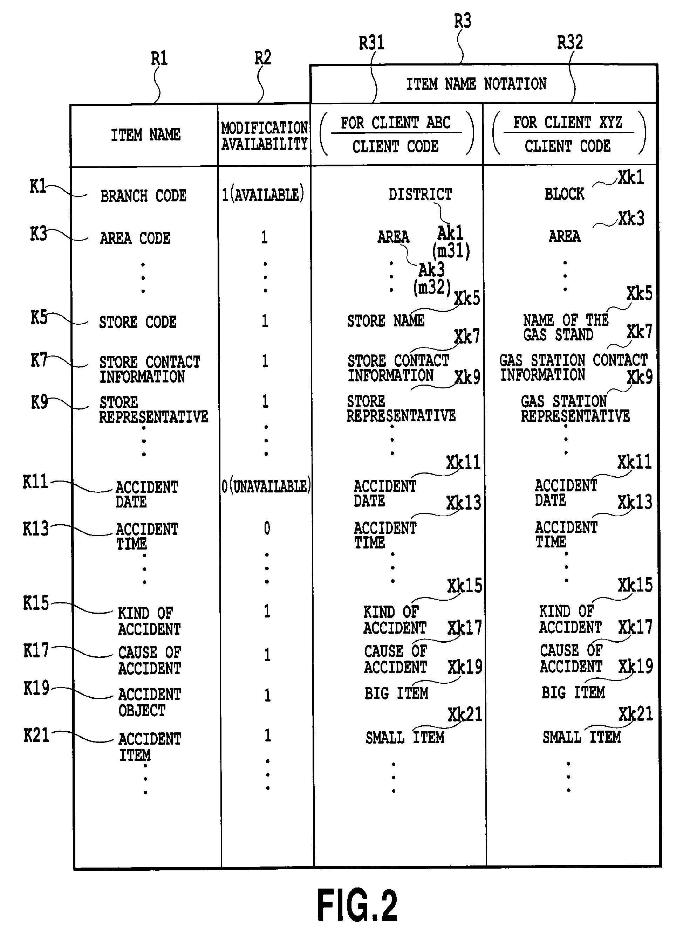

FIG. 1 shows a block diagram of a system of the item name notation and the master table contents by login ID control in the computer system which inputs, stores and refers to data through Internet. A computer system 10 includes a main server 1 connected to such as a client PC12 (PC for the client ABC) and a client PC13 (PC for the client XYZ) through Internet 11. The main server 1 includes a User Master M1, a Master Table for Item Name Notation M3 and various masters M5 inside as a master file which registered basic data, or connects to these Masters (the User Master M1, the Master Table for Item Name Notation M3 and the various masters M5 are set outside the main server 1 and connected to the main server 1 for convenience of explanation herein). The User Master M1 includes a table T1 identifying a client code m15 from a client ID number (ID) m11 and a password m13. The Master Table for Item Name Notation M3 includes a table T3 of item name notation identifying item name notations such as m31 and m32 based on the client code m15 (FIG. 2 is described hereinafter). The various masters M5 include tables such as master table contents T51 and T52 which manages master table contents such as m51 and m52 of various masters based on the client code m15.

Following means are provided in the main server 1 :
1. Receiving Means 3 for receiving a User ID Number m11 and a password m13 inputted via Internet 11 from client PC12 or 13.
2. Selecting Client Code Means 5 for selecting a client code m15 based on a User ID Number m11 and a password m13 in reference to the User Master M1 which stores the client code m15 corresponding to the ID m11 and a password 13.
3. Obtaining Item Name Notation Means 7A (included in a Obtaining Client Information Means 7) for obtaining item name notations m31 and m32 corresponding to the client code m15 in reference to the Master Table for Item Name Notation M3 which stores the item name notations m31 and m32 corresponding to the client code m15.
4. Obtaining Master Table Contents Means 7B (included in Obtaining Client Information Means 7) for obtaining the master table contents m51 and m52 corresponding to the client code m15 in reference to the various masters M5 including the table contents m51 and m52 corresponding to the client code m15.
5. Creating/Displaying Customized Screens Means for creating and displaying the customized screens for the clients which displays the item name notations m31 and m32, and the master table contents m51 and m52.

Receiving Means 3, Selecting Client Code Means 5, Obtaining Client Information Means 7 and Creating/Displaying Customized Screens Means for Each Client 9 are connected sequentially for exchanging signals. In addition, Selecting Client Code Means 5 is connected to the User Master M1, Obtaining Item Name Notation Means 7A in the Obtaining Client Information Means 7 is connected to the Master Table for Item Name Notation M3, and Obtaining Master Table Contents Means 7B is connected to the various masters M5, respectively. Creating/Displaying Customized Screens Means for Each Client 9 is connected to the Internet 11.

The system for changing the item name notation and the master table contents by login ID control is basically composed here of Receiving Means 3, Selecting Client Code Means 5, the Obtaining Client Information Means 7, Creating/Displaying Customized Screens Means for Each Client 9, the User Master M1, the Master Table for Item Name Notation M3 and the various masters M5.

Then, the brief explanation of the method will be provided. In step 1, the User ID m11 and the password m13 sent from the client PC12 or 13 by browser are received via Internet 11 (receiving step).

In step 2, a client code m15 is selected in reference to the User Master M1 which stored the client code m15 corresponding to the ID m11 and the password m13 based on the User ID Number m11 and the password m13 received in step 1 (Step of Selecting Client Code).

In step 3, the item name notation m31 and m32 corresponding to the client code m15 are obtained in reference to the Master Table for Item Name Notation M3 which stores the item name notations m31 and m32 corresponding to the client code m15. (Step of Obtaining Item Name Notation)

In step 4, the master table contents corresponding to the client code m15 is obtained in reference to the various masters M5 including the table contents m51 andm52 corresponding to the client code m15 (Step of Obtaining Master Table Contents) .

In step 5, Customized Screens for Each Client which displays the item name notation and the master table contents m51 and m52 obtained in step 3 and 4 are created and displayed (Step of Creating/Displaying Customized Screens for Each Client)

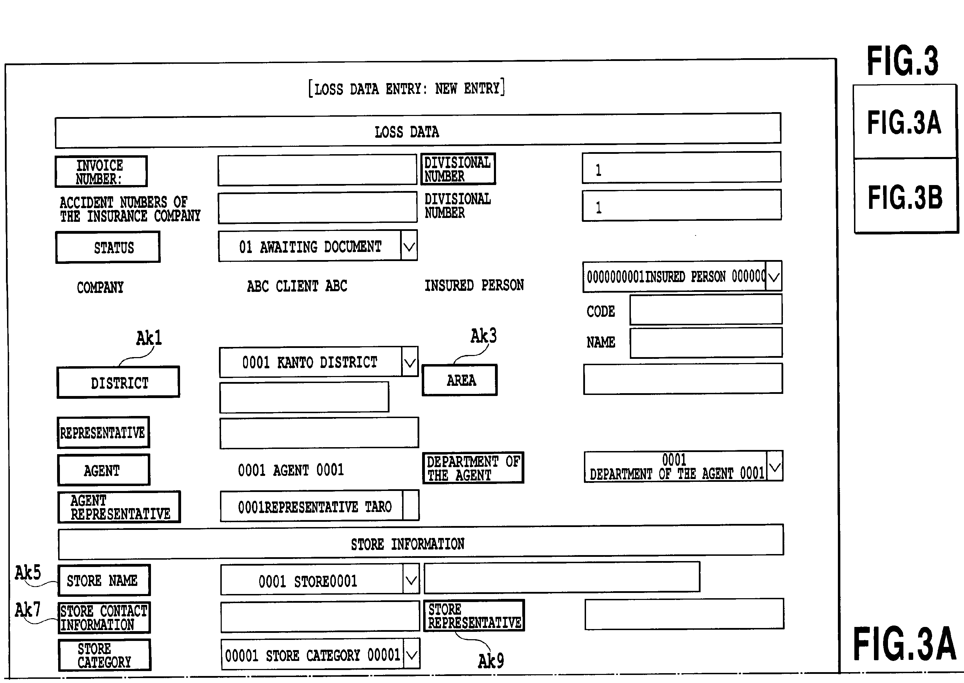

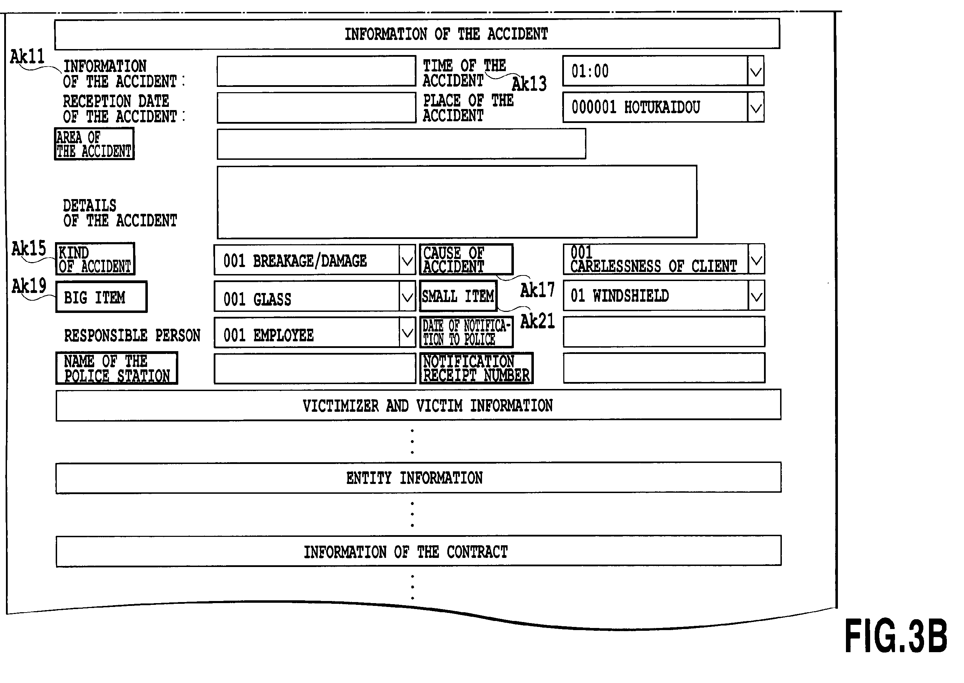

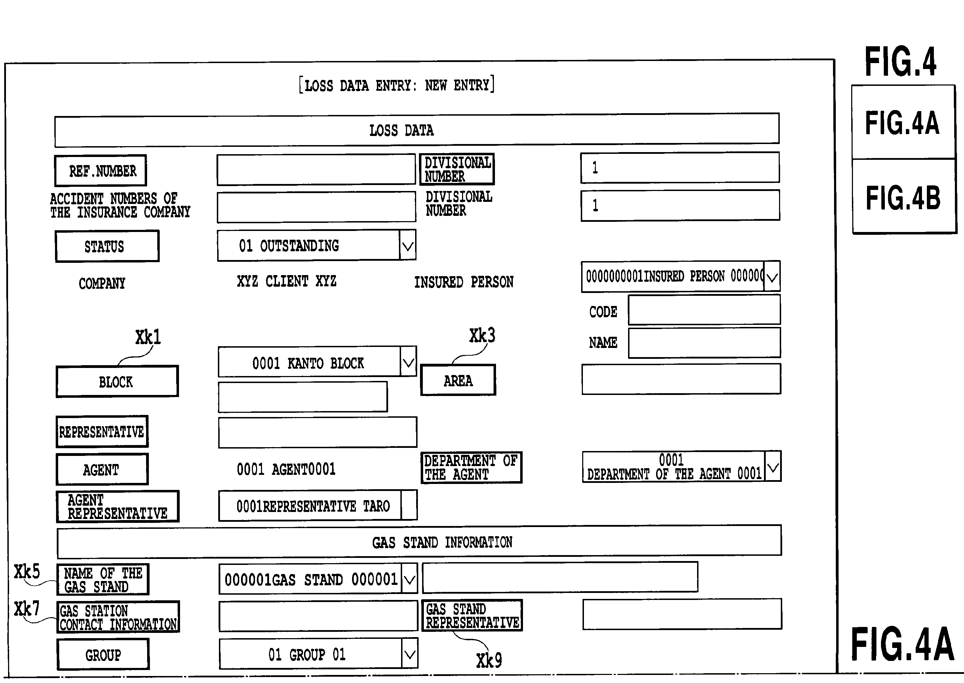

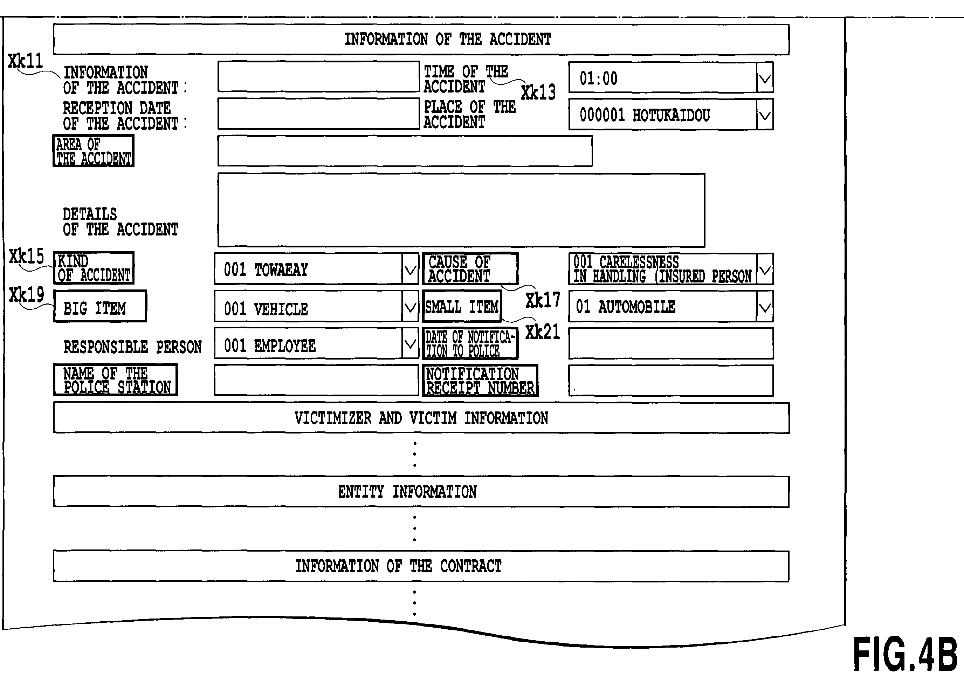

Thus, the Customized Screen for Each Client (FIG. 3A, 3B, FIG. 4A, 4B shown hereinafter) is displayed via Internet 11 on the client PC in which the User ID m11 and the password m13 are inputted. Input, additional entry and modification of loss data (damaged data) can be performed through the Customized Screen for Each Client from the client PC.

Next, the change of the item name notation will be described with specific examples. FIG. 2 shows an example of the table of the item name notation m31 and m32 referring to the clients ABC and XYZ in the Master Table for Item Name Notation M3. Assuming that the client ABC herein is a store manager, and XYZ is a gas station manager. The longitudinal column R1 is a column for "Item names" . The longitudinal column R3 is a column for the "Item name notations" and divided into a column R31 and a column R32 for the client ABC and the client XYZ respectively. The longitudinal column R2 is a "Modification availability" column indicating whether or not columns for the "Item name notation" of the corresponding horizontal row are available for modifying.

In addition, the relation between the horizontal rows of FIG. 2 will be described in reference to an example of the Customized Screen for client ABC in FIG 3A and 3B, and an example of client XYZ in FIG 4A and 4B. In the longitudinal column R1, "Branch code"K1, "Area code"K3, "Store code"K5, "store contact information"K7, "store representative"K9, "Accident date"K11, "Accident time"K13, and all the rest are recorded.

In the respective "modification availability" column of the horizontal row, "1" is recorded if the modification of the item name notation for the each client are available, and "0" is recorded if unavailable. The respective item name notations are stored in the column R31 for the client ABC and the column R32 for the client XYZ. For example, "district" Ak1 are stored in the column R31 for the client ABC and "block" Xk1 are stored in the column 32 for the client XYZ respectively for the item name "branch code" K1. Further, "area"Ak3 are stored in the column R31 for the client ABC and "area"Xk3 are stored in the column R32 for the client XYZ respectively for the item name "areacode"K3. The correspondent relations between the "item name" of the column R1, the "modification availability" of the column R2, and the "item name notation" of the column R31 and R32 for the client ABC and client XYZ are the same with the following K5 to K21 as shown in the table in FIG. 2 as described above. The reference numbers Ak1 and Ak3 in FIG. 3A and 3B correspond to those in FIG. 2. Additionally, the reference numbers Xk1 and Xk3 in FIG. 4A and 4B correspond to those in FIG. 2. The item mentioned "1" (modification available) in the table in FIG. 2 is shown in the heavy line frame in FIG. 3A, 3B and FIG. 4A, 4B respectively as item name notation such as "district" in FIG. 3A and "block" in FIG. 4A.

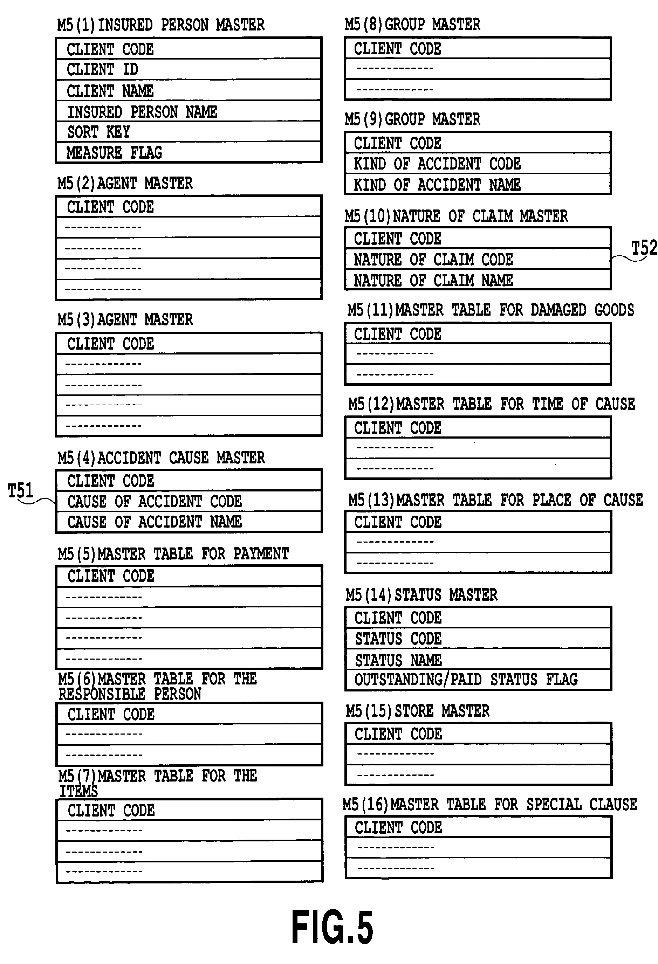

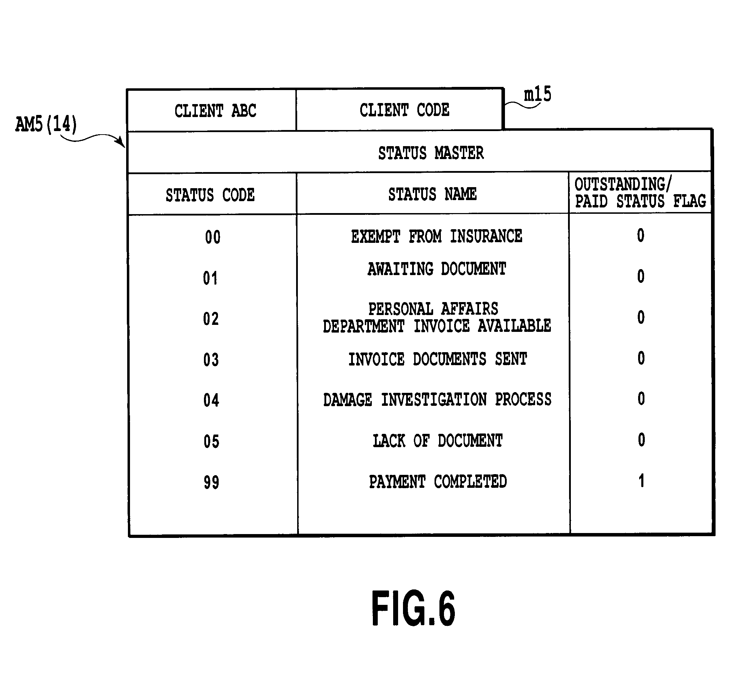

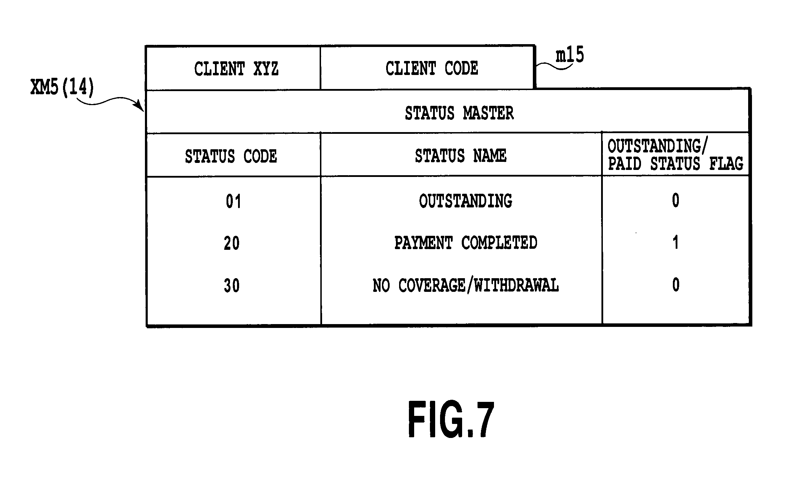

Next, the various masters M5, master table contents and the display on the display screen thereof will be described. FIG. 5 shows various masters which is manageable for each client code. The various masters M5 have (1) to (16) in FIG.5. Each of the various masters M5 are connected to the each client code m15 and managed on the basis of the client code m15 . FIG. 6 shows a table AM5(14) of the master table contents for the client ABC in the "status master" M5(14), and FIG. 7 shows a table XM5(14) of the master table contents for the client XYZ in the "status master".

As shown in FIG. 5, 6, and 7, the "status master" M5(14) consists of master table contents of "status code", "status name", and "Outstanding/Paid Status Flag" associated with the client code. In the master table contents of the table AM5(14) for the client ABC in FIG. 6, the "status name" is "exempt from insurance" corresponding to the "status code" of "00"and the " Outstanding/Paid Status Flag" is "0"(outstanding). The master table contents of the table AM5(14) for the client ABC in the "status master" M5(14) has "status codes" of "00" to "05" or "99". "status name" has names such as "exempt from insurance" , "Awaiting document" and "Personal Affairs Department, invoice available" corresponding to the above mentioned codes as shown in the table of FIG. 6. In addition, the "status name" corresponding to the "status code" of "99" is "Payment completed" and the "Outstanding/Paid Status Flag" is "1" (paid).

On the other hand, the master table contents of the table XM5(14) for the client XYZ in the "status master" M5(14) have "status code" being "01","20" or "30", "status name" being "outstanding", "payment completed" or "No Coverage/Withdrawal" , and "Outstanding/Paid Status Flag" being "0"(outstanding), "1"(paid), or "0"(outstanding), as shown in FIG. 7.

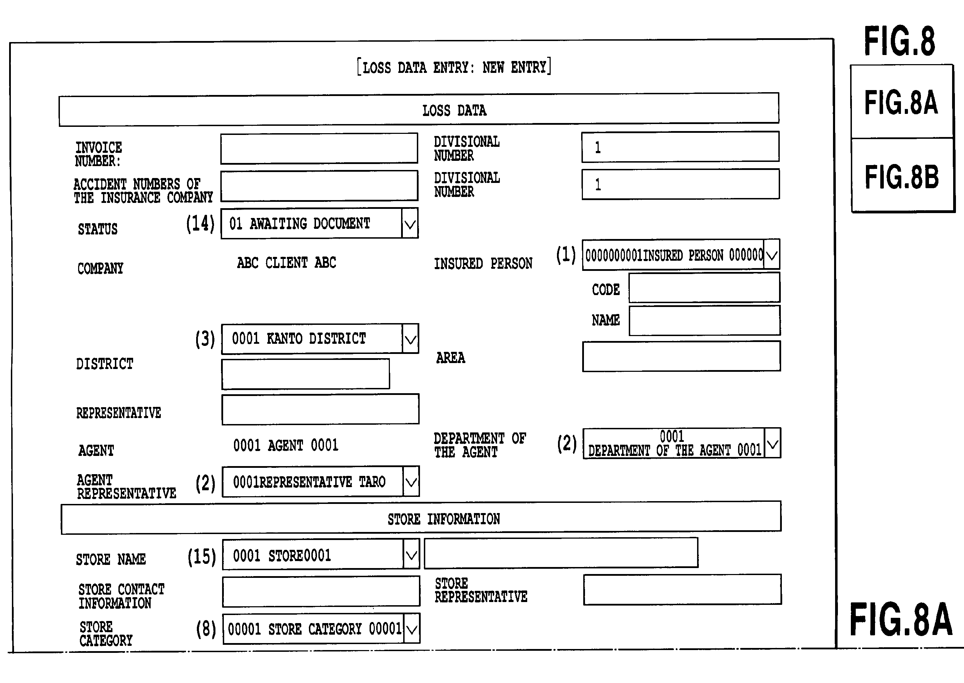

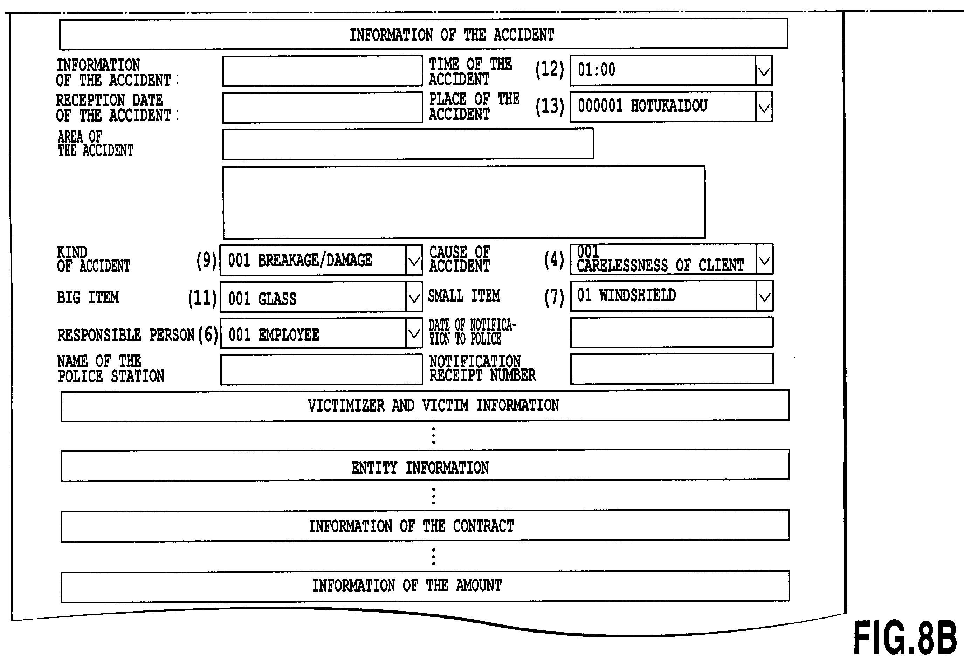

FIG. 8A and 8B show the Customized Screen for the client ABC for describing the correspondent relation between the various masters of FIG. 5 and the customized screen for the client ABC. The numbers in parentheses set forth herein correspond with the numbers in parentheses at the reference numbers of the various masters in FIG. 5. The numbers in parentheses in FIG. 8A and 8B represent the indicated contents managed by the various masters in FIG. 5. For example, (14) shown next to the status indication in FIG. 8A is represented to be managed by the status master M5(14) in FIG. 5.

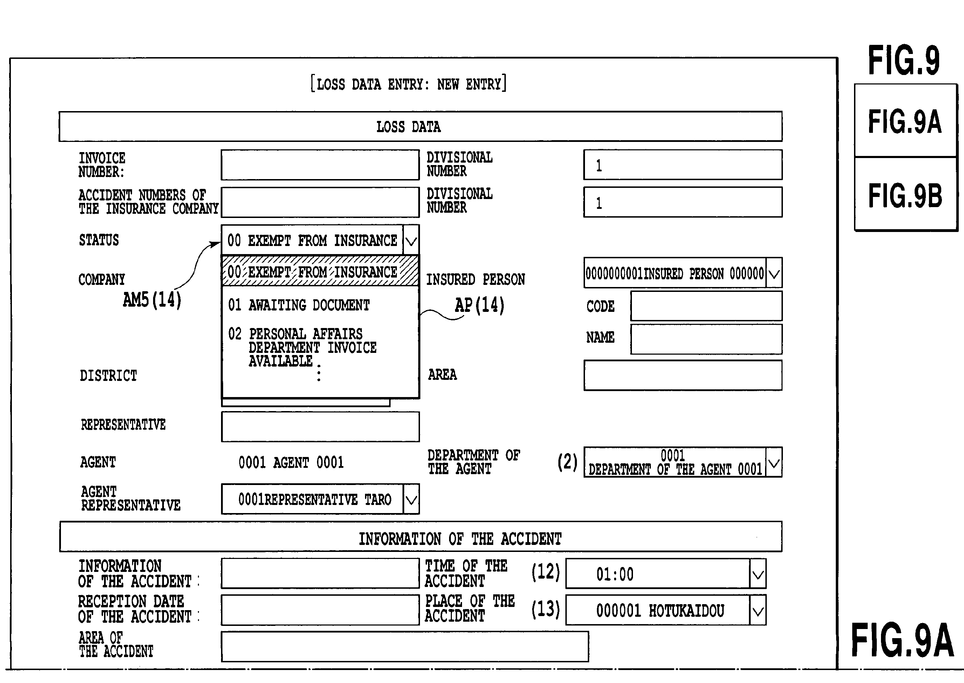

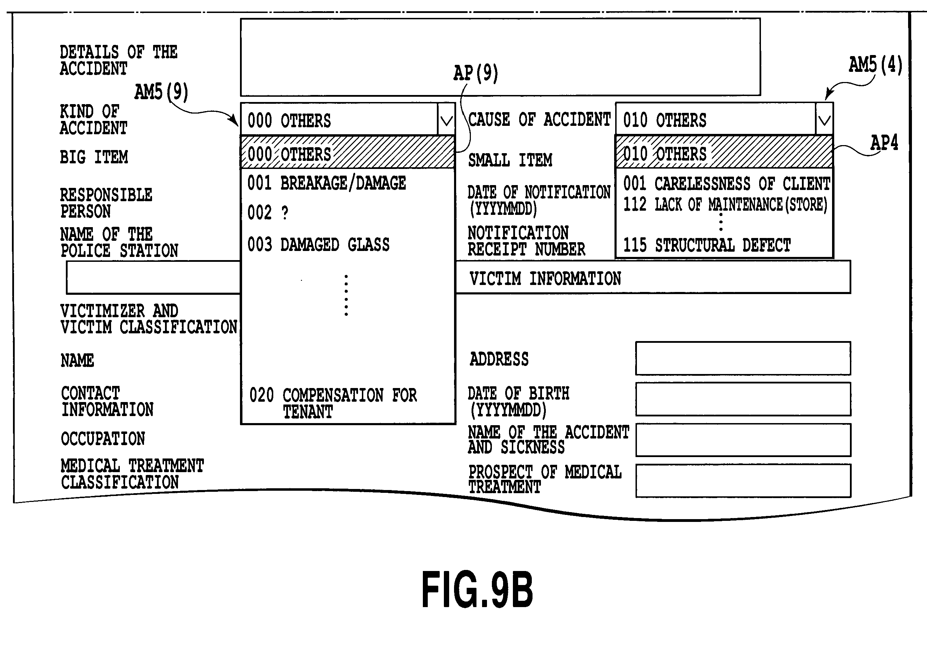

FIG. 9A and 9B show the customized screen for the client ABC and an example of a Pull-down menu managed by the various masters in FIG. 5. The Pull-down menu indication AP(14) indicate the Pull-down menu managed by the table AM5(14) as shown in the status master M5(14) in FIG. 6. Besides, the Pull-down menu indication AP(9) managed by the table AM5(9) of the Kind of Cause master M5(9), and the Pull-down menu indication AP(4) managed by the table AM5(4) of the accident cause master M5(4) are shown.

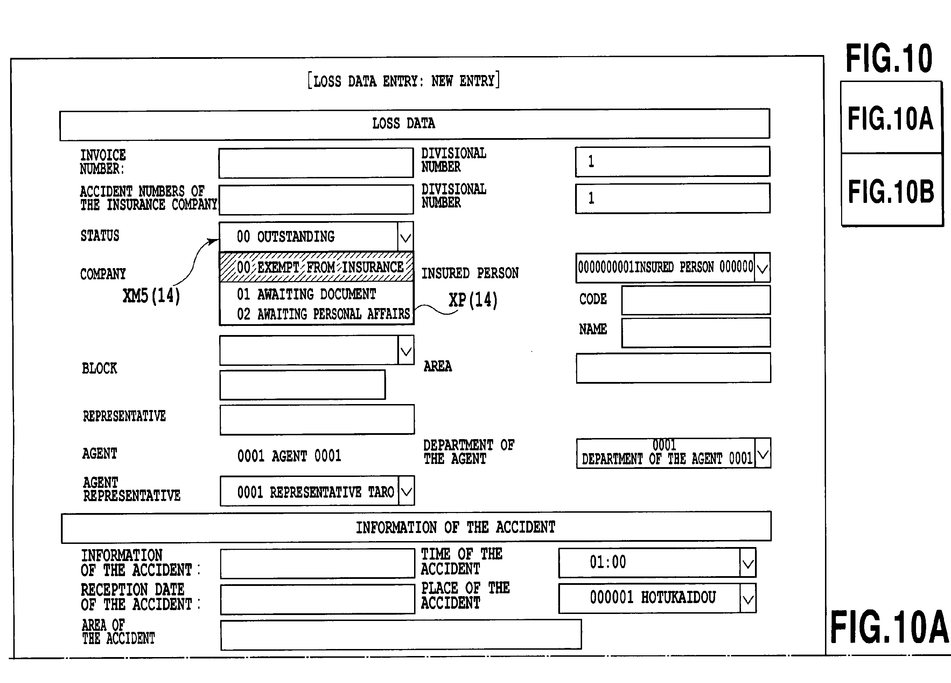

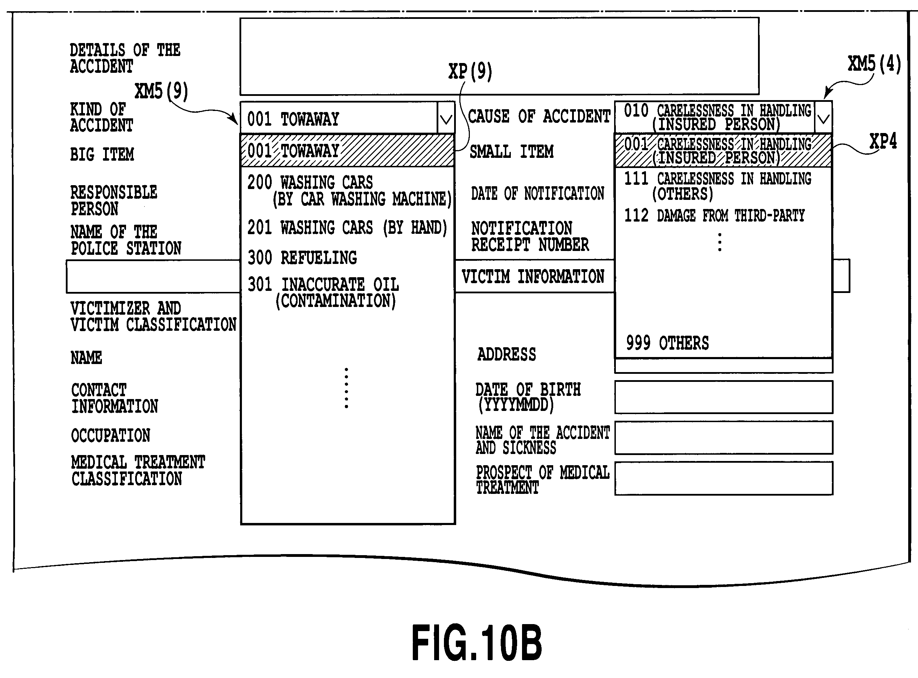

FIG. 10A and 10B show the customized screen for the client XYZ and an example of a Pull-down menu managed by the table of the various masters in FIG. 5. The pull-down menu indication XP(14) shows the pull-down menu managed by the table XM5(14) as shown in the status master M5(14) in FIG. 7. Besides, the pull-down menu indication XP(9) managed by the table XM5(9) of the Kind of Cause master M5(9), and the pull-down menu indication XP(4) managed by the table XM5(4) of the accident cause master M5(4) are shown. Inputting into the client PC is easy by selecting a possible item from the pull-down menu with a mouse-click.

While the invention has been disclosed in terms of one specific embodiment thereof, the client PC may be a portable PC or a cell-phone unit in the future. In addition, a plurality of User ID number (ID) for one specific client code are required for a number of employee's access. For example, a plurality of sub-code is provided for the client code to utilize the management depending on characters of establishments. An access control classification of a screen reference range authority and a screen modification range authority may be performed in parallel with a plurality of User ID numbers.

### INDUSTRIAL APPLICABILITY

Based on the above, a system, method and program of the present invention are useful for adjusting the item name notations and the table contents in the computer system which inputs, stores and refers to data through Internet.

## Claims

1. A system for changing an item name notation and a master table contents by login ID control in a computer system which inputs, stores and refers to data through Internet, **characterized by** comprising:
Receiving Means for receiving a User ID and a password;
Selecting Client Code Means for selecting client code based on the ID and the password in reference to a User Master which stores the client code corresponding to the ID and the password;
Obtaining Item Name Notation Means for obtaining a item name notation corresponding to the client code in reference to the Master Table for Item Name Notation which stores the item name notation corresponding to the client code;
Obtaining Master Table Contents Means for obtaining the master table contents corresponding to the client code in reference to the various masters including the table contents corresponding to the client code; and
Creating/Displaying Customized Screens Means for creating and displaying the Customized Screens for Each Client displaying the item name notation and the master table contents.

2. A method of changing an item name notation and a master table contents by login ID control in a computer system which inputs, stores and refers to data through Internet , **characterized by** comprising:
Receiving Step for receiving a User ID and a password;
Selecting Client Code Step for selecting client code based on the ID and the password in reference to a User Master which stores the client code corresponding to the ID and the password;
Obtaining Item Name Notation Step for obtaining a item name notation corresponding to the client code in reference to the Master Table for Item Name Notation which stores the item name notation corresponding to the client code;
Obtaining Master Table Contents Step for obtaining the master table contents corresponding to the client code in reference to the various masters including the table contents corresponding to the client code; and
Creating/Displaying Customized Screens Step for creating and displaying the Customized Screens for Each Client displaying the item name notation and the master table contents.

3. A program for changing a item name notation and a master table contents by login ID control, when executed by a computer system which inputs, stores and refers to data through Internet, cause the computer to perform a method **characterized by** comprising:
Receiving Step for receiving a User ID and a password;
Selecting Client Code Step for selecting a client code based on the ID and the password in reference to the User Master which stores the client code corresponding to the ID and the password;
Obtaining Item Name Notation Step for obtaining the item name notation corresponding to the client code in reference to the Master Table for Item Name Notation which stores the item name notation corresponding to the client code;
Obtaining Master Table Contents Step for obtaining the corresponding master table contents corresponding to the client code in reference to the various masters including the table contents corresponding to the client code; and
Creating/Displaying Customized Screens Step for creating and displaying the Customized Screens for Each Client displaying the item name notation and the master table contents.
